# EUROPEAN PATENT APPLICATION

(11) **EP 2 251 856 A2**
(43) Date of publication of application: **17.11.2010**
(21) Application number: 10005084.8
(22) Date of filing: 14.05.2010
(51) Int. Cl.: G09G 5/14, H04N 13/00, G06F 3/033, G06F 3/048

(54) **Mobile terminal equipped with multi-view display and method of controlling the mobile terminal**

(30) Priority: 15.05.2009 KR 20090042741; 22.05.2009 KR 20090045054; 28.07.2009 KR 20090069016
(71) Applicant: LG Electronics Inc., Seoul 150-721 (KR)
(72) Inventor: Kang, Yunhwan, Seoul 153-023 South Korea (KR); Shin, Duckmoon, Seoul 153-023 South Korea (KR); Cho, Seonhwi, Yeongdeungpo-gu Seoul 150-721 (KR); Yi, Woojoon, Yeongdeungpo-gu Seoul 150-721 (KR); Lee, Jinbaek, Yeongdeungpo-gu Seoul 150-721 (KR)
(74) Representative: Katérle, Axel

(57) **Abstract**

A display method for a terminal includes displaying simultaneously, on a single display, a plurality of screens in a corresponding plurality of spatially different directions. The method further includes displaying an item on a first screen of the plurality of screens, receiving user input at the terminal with regard to the item, and displaying item information on a second screen of the plurality of screens responsive to the receiving of the user input, such that the item information includes information relating to the item.

## Description

### CROSS-REFERENCE TO RELATED APPLICATION

This application claims the benefit of earlier filing date and right of priority to Korean Application Nos. 10-2009-0042741, filed on May 15, 2009, 10-2009-0045054, filed on May 22, 2009, and 10-2009-0069016, filed on July 28, 2009, the contents of which are hereby incorporated by reference herein in their entirety

### BACKGROUND OF THE INVENTION

### 1. Field of the Invention

The present invention relates to a mobile terminal equipped with a multi-view display capable of providing a plurality of screens at the same time by displaying the screens in different directions and a method of controlling the mobile terminal.

### 2. Description of the Related Art

Mobile terminals are portable devices, which can provide users with various services such as a voice calling service, a video calling service, an information input/output service, and a data storage service.

As the types of services provided by mobile terminals diversify, an increasing number of mobile terminals have been equipped with various complicated functions such as capturing photos or moving pictures, playing music files or moving image files, providing game programs, receiving broadcast programs and providing wireless internet services and have thus evolved into multimedia players.

Various attempts have been made to realize such complicated functions as hardware devices or software programs. For example, various user interface (UI) environments, in which users are allowed to easily search for and choose desired functions, have been developed. In addition, the demand for various designs for mobile terminals such as a double-sided liquid crystal display (LCD) or a full touch screen has steadily grown due to a growing tendency of considering mobile terminals as personal items that can represent personal individuality.

However, there is a restriction in allocating sufficient space for a UI (such as a display device) of a mobile terminal without compromising the mobility and the portability of a mobile terminal. Therefore, for an efficient use of various functions provided by a mobile terminal, it is necessary to develop ways to effectively control the operation of a mobile terminal using a new data input/output method and using a multi-view display capable of providing a plurality of screens at the same time by displaying the screens in different display directions.

### SUMMARY OF THE INVENTION

The present invention provides a mobile terminal equipped with a multi-view display capable of providing a plurality of screens at the same time by displaying the screens in different display directions and a method of controlling the mobile terminal.

According to an aspect of the present invention, there is provided a method of controlling a mobile terminal, the method including providing a display module capable of providing a plurality of screens at the same time by displaying the screens in different display directions and displaying a first preview image provided by a camera on the display module in a first display direction when the display module is held in its initial position; if the display module is rotated in a first direction from its initial position by a predetermined amount, displaying a second preview image provided by the camera on the display module in a second display direction; and if the display module is rotated in a second direction from its initial position by the predetermined amount, displaying a third preview image provided by the camera on the display module in a third display direction.

According to another aspect of the present invention, there is provided a mobile terminal including a camera; a display module configured to be capable of providing a plurality of screens at the same time by displaying the screens in different display directions; a sensing unit configured to sense the motion of the display module and output the results of the sensing; and a controller configured to display a first preview image provided by the camera on the display module in a first display direction when the display module is held in its initial position and to display a second preview image provided by the camera on the display module in a second display direction if the results of the sensing performed by the motion sensor indicates that the display module has been rotated in a first direction from its initial position by a predetermined amount.

According to another aspect of the present invention, there is provided a method of controlling a mobile terminal, the method including providing a display module capable of providing a plurality of screens at the same time by displaying the screens in different display directions, and displaying first through third operation screens on the display module in first through third display directions, respectively; receiving a user input through one of the first through third operation screens; and selecting one of the first through third operation screens based on a relative location of a user to the display module and performing an operation corresponding to the received user input on the selected operation screen.

According to another aspect of the present invention, there is provided a mobile terminal including a display module configured to be capable of providing a plurality of screens at the same time by displaying the screens in different display directions; a sensing unit configured to sense a relative position of a user to the display module; and a controller configured to display first through third operation screens on the display module in first through third display directions, respectively, wherein, if a user input is received through the display module, the controller selects one of the first through third operation screens based on a relative location of a user to the display module and performs an operation corresponding to the received user input on the selected operation screen.

According to another aspect of the present invention, there is provided a method of controlling a mobile terminal, the method including providing a display module capable of providing a plurality of screens at the same time by displaying the screens in different display directions, connecting a video conference call; and displaying images of first through third participants in the video conference call on the display module in first through third display directions, respectively.

According to another aspect of the present invention, there is provided a mobile terminal including a wireless communication unit configured to connect a call; a display module configured to be capable of providing a plurality of screens at the same time by displaying the screens in different display directions; and a controller configured to connect a video conference call via the wireless communication unit and display images of first through third participants in the video conference call on the display module in first through third display directions, respectively.

According to another aspect of the present invention, there is provided a method of controlling a mobile terminal, the method including providing a display module capable of providing a plurality of screens at the same time by displaying the screens in different display directions; receiving a broadcast signal; and displaying first through third broadcast screens obtained by demodulating the broadcast signal on the display module in first through third display directions, respectively.

According to another aspect of the present invention, there is provided a mobile terminal including a broadcast reception module configured to receive a broadcast signal; a display module configured to be capable of providing a plurality of screens at the same time by displaying the screens in different display directions; and a controller configured to display first through third broadcast screens obtained by demodulating the broadcast signal on the display module in first through third display directions, respectively.

According to another aspect of the present invention, there is provided a method of controlling a mobile terminal, the method including providing a display module capable of providing a plurality of screens at the same time by displaying the screens in different display directions; selecting an operating mode; displaying a first screen corresponding to the selected operating mode on the display module in a first display direction; and displaying second and third screens corresponding to the selected operating mode on the display module in second and third display directions, respectively.

According to another aspect of the present invention, there is provided a mobile terminal including a display module configured to be capable of providing a plurality of screens at the same time by displaying the screens in different display directions; and a controller configured to select an operating mode and display first through third screens corresponding to the selected operating mode on the display module in first through third display directions, respectively.

### BRIEF DESCRIPTION OF THE DRAWINGS

The above and other features and advantages of the present invention will become more apparent by describing in detail preferred embodiments thereof with reference to the attached drawings in which:
FIG. 1 illustrates a block diagram of a mobile terminal according to an exemplary embodiment of the present invention;
FIG. 2 illustrates a front perspective view of the mobile terminal shown in FIG. 1;
FIG. 3 illustrates a rear perspective view of the mobile terminal shown in FIG. 1;
FIGS. 4 and 5 illustrate diagrams for explaining the structure and operation of a multi-view display that can be used in the mobile terminal shown in FIG. 1;
FIG. 6 illustrates a flowchart of a method of controlling a mobile terminal according to a first exemplary embodiment of the present invention;
FIG. 7 illustrates a flowchart of a method of controlling a mobile terminal according to a second exemplary embodiment of the present invention;
FIG. 8 illustrates a flowchart of a method of controlling a mobile terminal according to a third exemplary embodiment of the present invention;
FIG. 9 illustrates a flowchart of a method of controlling a mobile terminal according to a fourth exemplary embodiment of the present invention;
FIG. 10 illustrates a flowchart of a method of controlling a mobile terminal according to a fifth exemplary embodiment of the present invention;
FIGS. 11 through 14 illustrate diagrams of various screens that can be displayed by a multi-view display;
FIGS. 15 and 16 illustrate how to control the mobile terminal shown in FIG. 1 in a three-dimensional (3D) camera shooting mode;
FIGS. 17 through 19 illustrate how to select and execute one of a plurality of objects displayed on a screen;
FIGS. 20 through 23 illustrate how to control the mobile terminal shown in FIG. 1 in a 3D video call mode;
FIG. 24 illustrates how to control the mobile terminal shown in FIG. 1 in a 3D broadcast viewer mode; and
FIGS. 25 through 33 illustrate how to control the mobile terminal shown in FIG. 1 in other various operating modes.

### DETAILED DESCRIPTION OF THE INVENTION

The present invention will hereinafter be described in detail with reference to the accompanying drawings in which exemplary embodiments of the invention are shown.

The term 'mobile terminal', as used herein, may indicate a mobile phone, a smart phone, a laptop computer, a digital broadcast receiver, a personal digital assistant (PDA), a portable multimedia player (PMP), or a navigation device. In this disclosure, the terms 'module' and 'unit' can be used interchangeably.

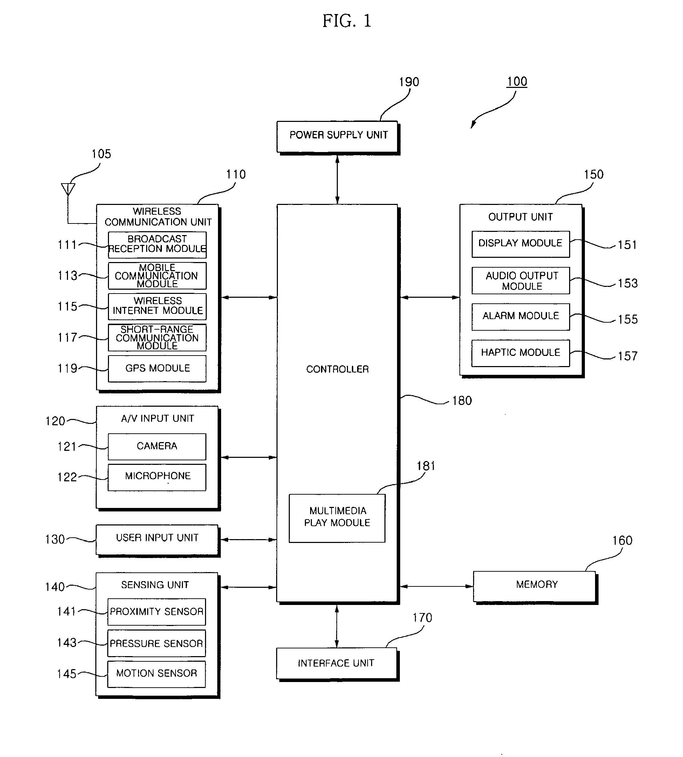

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the AN input unit 120, the user input unit 130, the sensing unit 140, the output unit 150, the memory 160, the interface unit 170, the controller 180, and the power supply unit 190 may be incorporated into a single unit, or some of the wireless communication unit 110, the A/V input unit 120, the user input unit 130, the sensing unit 140, the output unit 150, the memory 160, the interface unit 170, the controller 180, and the power supply unit 190 may be divided into two or more smaller units.

The wireless communication unit 110 may include a broadcast reception module 111, a mobile communication module 113, a wireless internet module 115, a short-range communication module 117, and a global positioning system (GPS) module 119.

The broadcast reception module 111 may receive a broadcast signal and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signal may be a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111. The broadcast-related information may come in various forms. For example, the broadcast-related information may be electronic program guide (EPG) of digital multimedia broadcasting (DMB) or may be electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO), DVB-H, and integrated services digital broadcast-terrestrial (ISDB-T). In addition, the broadcast reception module 111 may be configured to be suitable for nearly all types of broadcasting systems other than those set forth herein. The broadcast signal and/or the broadcast-related information received by the broadcast reception module 111 may be stored in the memory 160.

The mobile communication module 113 may transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The A/V input unit 120 may include a camera 121 and a microphone 123. The camera 121 may process various image frames such as still images or moving images captured by an image sensor in a video call mode or an image capturing mode. The image frames processed by the camera 121 may be displayed by a display module 151.

The image frames processed by the camera 121 may be stored in the memory 160 or may be transmitted to an external device through the wireless communication unit 110. The mobile terminal 100 may include two or more cameras 121.

The microphone 123 may receive external sound signals during a call mode, a recording mode, or a voice recognition mode with the use of a microphone and may convert the sound signals into electrical sound data. In the call mode, the mobile communication module 113 may convert the electrical sound data into data that can be readily transmitted to a mobile communication base station and then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, a touch pad (static pressure/static voltage), a jog wheel, or a jog switch. In particular, if the user input unit 130 is implemented as a touch pad and forms a layer structure together with the display module 151, the user input unit 130 and the display module 151 may be collectively referred to as a touch screen.

The sensing unit 140 determines a current state of the mobile terminal 100 such as whether the mobile terminal 100 is opened up or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 may determine whether the mobile terminal 100 is opened up or closed. In addition, the sensing unit 140 may determine whether the mobile terminal 100 is powered by the power supply unit 190 and whether the interface unit 170 is connected to an external device.

The sensing unit 140 may include a proximity sensor 141, a pressure sensor 143 and a motion sensor 145. The proximity sensor 141 may detect the existence of an object nearby without any mechanical contact by detecting a variation in an alternating magnetic field or a static magnetic field or a variation in static capacitance. The sensing unit 140 may include two or more proximity sensors 141.

The pressure sensor 143 may determine whether pressure is being applied to the mobile terminal 100 or may measure the level of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated using a higher pressure level than that used to generate a typical touch input, based on data provided by the pressure sensor 143. In addition, when a pressure touch input is detected from the display module 151, it is possible to determine the level of pressure applied to the display module 151 upon the detection of a pressure touch input based on data provided by the pressure sensor 143.

The motion sensor 145 may determine the location of the mobile terminal 100 or may sense the movement of the mobile terminal 100. An acceleration sensor or a gyro-sensor may be used as the motion sensor 145.

Acceleration sensors are a type of device for converting an acceleration variation into an electric signal. With recent developments in micro-electromechanical system (MEMS) technology, acceleration sensors have been widely used in various products for various purposes. For example, an acceleration sensor may be installed in an airbag system for an automobile and may thus be used to detect collisions. Alternatively, an acceleration sensor may be used as an input device for a computer game and may sense the motion of the human hand during a computer game. Two or three acceleration sensors 145 representing different axial directions may be installed in the mobile terminal 100. Alternatively, only one acceleration sensor 145 representing a Z axis may be installed in the mobile terminal 100.

Gyro-sensors are sensors measuring angular velocity and are thus able to determine the deviation of the direction of an object from a reference direction.

The output unit 150 may output an audio signal, a video signal and an alarm signal. The output unit 150 may include the display module 151, and an audio output module 153, an alarm module 155 and a haptic module 157.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

If the display module 151 and the user input unit 130 form a layer structure together and are thus implemented as a touch screen, the display module 151 may be used as both an output device and an input device. If the display module 151 is implemented as a touch screen, the display module 151 may also include a touch screen panel and a touch screen panel controller. The touch screen panel may be a transparent panel attached onto the exterior of the mobile terminal 100 and may be connected to an internal bus of the mobile terminal 100. The touch screen panel may keep monitoring whether the touch screen panel is being touched by the user. Once there is touch input detected from the touch screen panel, the touch screen panel may transmit a number of signals corresponding to the detected touch input to the touch screen panel controller. The touch screen panel controller may process the signals transmitted by the touch screen panel, and may transmit the processed signals to the controller 180. Then, the controller 180 may determine whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of a liquid crystal display (LCD), a thin film transistor (TFT)-LCD, an organic light-emitting diode (OLED), a flexible display, a three-dimensional (3D) display and a transparent display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving a call signal or a message. In addition, the alarm module 155 may receive a key signal and may output an alarm signal as feedback to the key signal. Therefore, the user may be able to easily recognize the occurrence of an event based on an alarm signal output by the alarm module 155. Not only the alarm module 155 but also the display module 151 and the audio output module 153 may output an alarm signal in order to alert the user to the occurrence of an event.

The haptic module 157 may provide various haptic effects (such as vibrations) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a phonebook, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia play module 181, which plays multimedia data. The multimedia play module 181 may be implemented as a hardware device and may be installed in the controller 180. Alternatively, the multimedia play module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

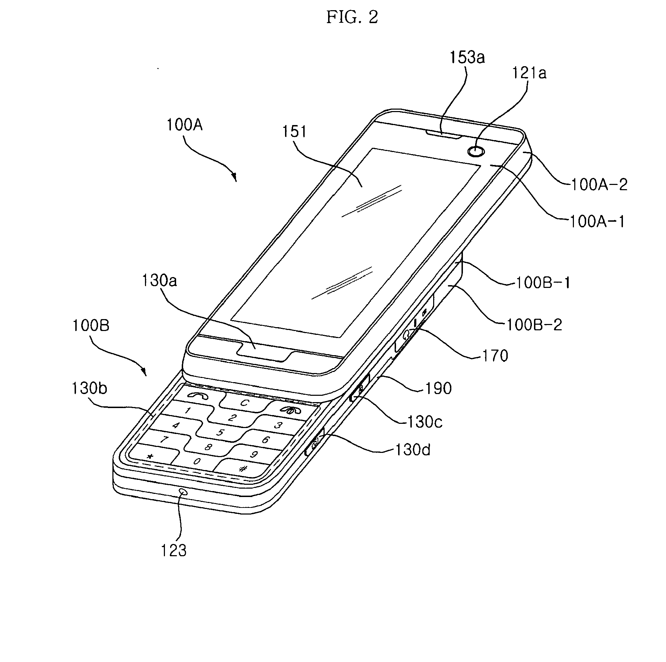

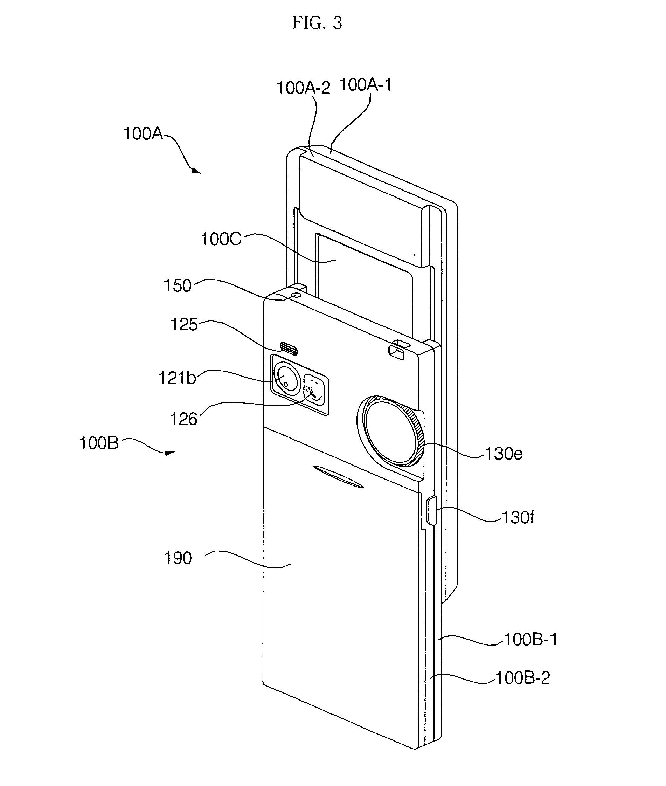

The exterior of the mobile terminal 100 will hereinafter be described in detail with reference to FIGS. 2 and 3. For convenience, assume that the mobile terminal 100 is a slider-type mobile terminal equipped with a touch screen. However, the present invention is not restricted to a slider-type mobile terminal. Rather, the present invention can be applied to various types of mobile phones, other than a slider-type mobile terminal.

FIG. 2 illustrates a front perspective view of the mobile terminal 100 shown in FIG. 1. Referring to FIG. 2, the mobile terminal 100 may include a first body 100A and a second body 100B. The first and second bodies 100A and 100B may be configured to be able to slide up and down against each other.

When the first body 100A and the second body 100B completely overlap each other, the mobile terminal 100 is referred to as being closed. On the other hand, when the first body 100A is slid up against the second body 100B and thus the front of the second body 100B is partially exposed, as shown in FIG. 2, the mobile terminal 100 is referred to as being open.

When the mobile terminal 100 is closed, the mobile terminal may generally operate in a standby mode and may be released from the standby mode in response to user manipulation. On the other hand, when the mobile terminal 100 is open, the mobile terminal 100 may generally operate in a call mode and may be switched to the standby mode either manually in response to user manipulation or automatically after the lapse of a predefined amount of time.

Referring to FIG. 2, the exterior of the first body 100A may be defined by a first front case 100A-1 and a first rear case 100A-2. Various electronic devices may be installed in the space formed by the first front case 100A-1 and the first rear case 100A-2. At least one intermediate case may be additionally provided between the first front case 100A-1 and the first rear case 100A-2. The first front case 100A-1 and the first rear case 100A-2 may be formed of a synthetic resin through injection molding. Alternatively, the first front case 100A-1 and the first rear case 100A-2 may be formed of a metal such as stainless steel (STS) or titanium (Ti).

The display module 151, a first audio output module 153a, a first camera 121a and a first user input unit 130a may be provided in the first front case 100A-1.

Examples of the display module 151 include an LCD and an OLED which can visualize information. Since a touch pad is configured to overlap the display module 151 and thus to form a layer structure, the display module 151 may serve as touch screens. Thus, it is possible to input various information to the mobile terminal 100 simply by touching the display module 151.

The first audio output module 153a may be implemented as a receiver or a speaker. The first camera 121 a may be configured to capture a still image or a moving image of the user.

The exterior of the second body 100B may be defined by a second front case 100B-1 and a second rear case 100B-2. A second user input unit 130b may be disposed in the second body 100B, and particularly, at the front of the second front case 100B-1. Third and fourth user input units 130c and 130d, the microphone 123 and the interface unit 170 may be provided in the second front case 100B-1 or the second rear case 100B-2.

The first through fourth user input units 130a through 130d may be collectively referred to as the user input unit 130. The user input unit 130 may adopt various manipulation methods as long as it can offer tactile feedback to the user.

For example, the user input unit 130 may be implemented as a dome switch or a touch pad which receives a command or information upon being pushed or touched by the user. Alternatively, the user input unit 130 may be implemented as a wheel, a jog dial, or a joystick.

The first user input unit 130a may allow the user to input various commands such as 'start', 'end', and 'scroll' to the mobile terminal 100, the second user input unit 130b may be used to input various numerals, characters or symbols, and the third and fourth user input units 130c and 130d may be used as hot keys for activating certain functions of the mobile terminal 100.

The microphone 123 may be configured to be able to properly receive the voice of the user or other sounds.

The interface unit 170 may serve as a path for allowing the mobile terminal 100 to exchange data with an external device. For example, the interface unit 170 may be a connector for connecting an earphone to the mobile terminal 100 in an either wired or wireless manner, a port for short-range communication or a power supply port for supplying power to the mobile terminal 100. The interface unit 170 may be a card socket for accommodating an exterior card such as a SIM or UIM card or a memory card.

FIG. 3 illustrates a rear perspective view of the mobile terminal 100 shown in FIG. 2. Referring to FIG. 3, a fifth user input unit 130e and the second camera 121b may be disposed at the rear of the second rear case 100B-2 of the second body 100B, and a sixth user input unit 130f may be disposed on one side of the second body 100B.

The second camera 121b may have a different photographing direction from that of the first camera 121a shown in FIG. 2. In addition, the first and second cameras 121a and 121b may have different resolutions. For example, the first camera 121 a may be used to capture and then transmit an image of the face of the user during a video call. Thus, a low-resolution camera may be used as the first camera 121 a. The second camera 121b may be used to capture an image of an ordinary subject. In this case, the image captured by the second camera 121b may not need to be transmitted. Thus, a high-resolution camera may be used as the second camera 121b.

A cameral flash 125 and a mirror 126 may be disposed near the second camera 121b. The cameral flash 125 may be used to illuminate a subject when the user attempts to capture an image of the subject with the second camera 121b. The mirror 126 may be used for the user to prepare him- or herself for taking a self shot.

A second audio output module (not shown) may be additionally provided in the second rear case 100B-2. The second audio output module may realize a stereo function along with the first audio output module 153a. The second audio output module may also be used in a speaker-phone mode.

An antenna (not shown) for receiving a broadcast signal may be disposed on one side of the second rear case 100B-2. The antenna may be installed so as to be able to be pulled out of the second rear case 100B-2.

A slide module 100C may be partially exposed on the first rear case 100A-2 of the first body 100A. The slide module 100C may couple the first body 100A and the second body 100B such that the first body 100A and the second body 100B can slide up and down against each other. A portion of the slide module 100C may be hidden from view by the second front case 100B-1 of the second body 100B, and thus may not be exposed.

The second camera 121b and the other elements that have been described as being provided on the rear case 100A-2 may be provided on the front case 100A-1. In addition, the first camera 121a may be configured to be rotatable and thus to cover the photographing direction of the second camera 121b. In this case, the second camera 121b may be optional.

The power supply unit 190 may be disposed in the rear case 100A-2. The power supply unit may be a rechargeable battery and may be coupled to the rear case 100A-2 so as to be attachable to or detachable from the rear case 100A-2.

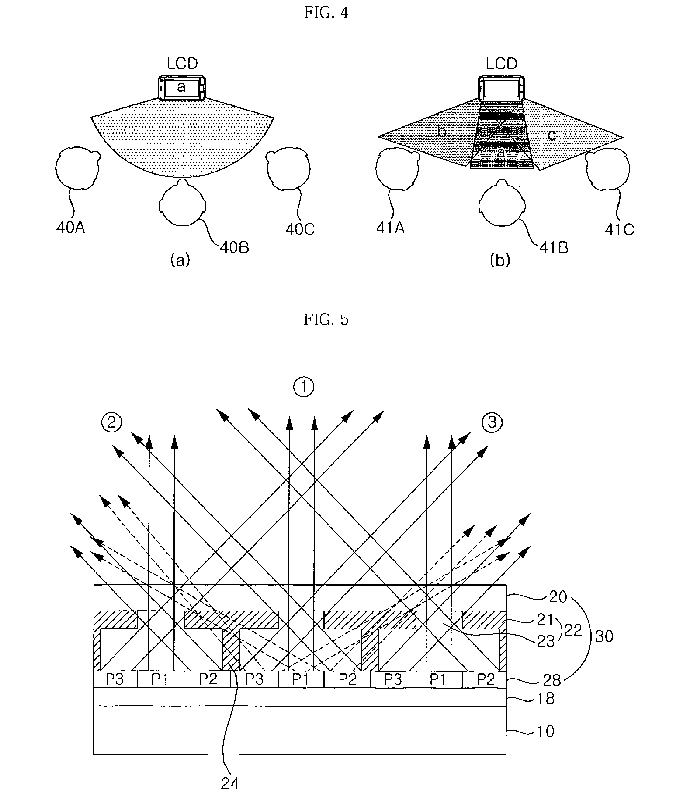

FIGS. 4 and 5 illustrate diagrams for explaining the structure and operation of a multi-view display that can be used in the mobile terminal 100.

More specifically, FIG. 4(a) illustrates a typical display. Referring to FIG. 4(a), viewers 40A, 40B and 40C can view the same screen from the typical display regardless of their different viewing angles.

FIG. 4(b) illustrates a multi-view display that can provide three different screens for three different directions. Referring to FIG. 4(b), the multi-view display may include a filter that restricts the viewing angle of the multi-view display on a pixel-by-pixel basis, and may thus allow viewers 41A, 41B and 41C from left, front and right viewing zones b, a and c, respectively, to view different screens therefrom.

FIG. 5 illustrates the structure of the multi-view display shown in FIG. 4(b). Referring to FIG. 5, the multi-view display may include a lower substrate 10, an upper substrate 30 and a liquid crystal layer 18 interposed between the lower substrate 10 and the upper substrate 30. The upper substrate 30 may include a mask filter 22, a plurality of light-shield walls 13 and a color filter array 28. A plurality of light-shield portions 21 and a plurality of light-transmission portions 23 may be alternately arranged in the mask filter 22.

When the multi-view display is viewed from the front viewing zone a of FIG. 4(b), the light-shield portions 21 may shield light emitted from second pixel regions P2 and third pixel regions P3, and the light-transmission portions 23 may allow light emitted from first pixel regions P1 to pass through the mask filter 22. As a result, an image displayed in first pixel regions P1 can appear visible in a first display direction ①.

On the other hand, when the multi-view display is viewed from the left viewing zone b of FIG. 4(b), the light-shield portions 21 may shield light emitted from the first pixel regions P1 and the third pixel regions P3, and the light-transmission portions 23 may allow light emitted from the second pixel regions P2 to pass through the mask filter 22. As a result, an image displayed in the second pixel regions P2 can appear visible in a second display direction ②.

On the other hand, when the multi-view display is viewed from the right viewing zone c of FIG. 4(b), the light-shield portions 21 may shield light emitted from the first pixel regions P1 and the second pixel regions P2, and the light-transmission portions 23 may allow light emitted from the third pixel regions P3 to pass through the mask filter 22. As a result, an image displayed in the third pixel regions P3 can appear visible in a third display direction ③.

In this manner, the multi-view display may be able to provide three different images for three different display directions, i.e., the first through third display directions ①, ② and ③. However, the present invention is not restricted to this. That is, the multi-view display may be configured to be able to provide more than three screens for more than three different display directions.

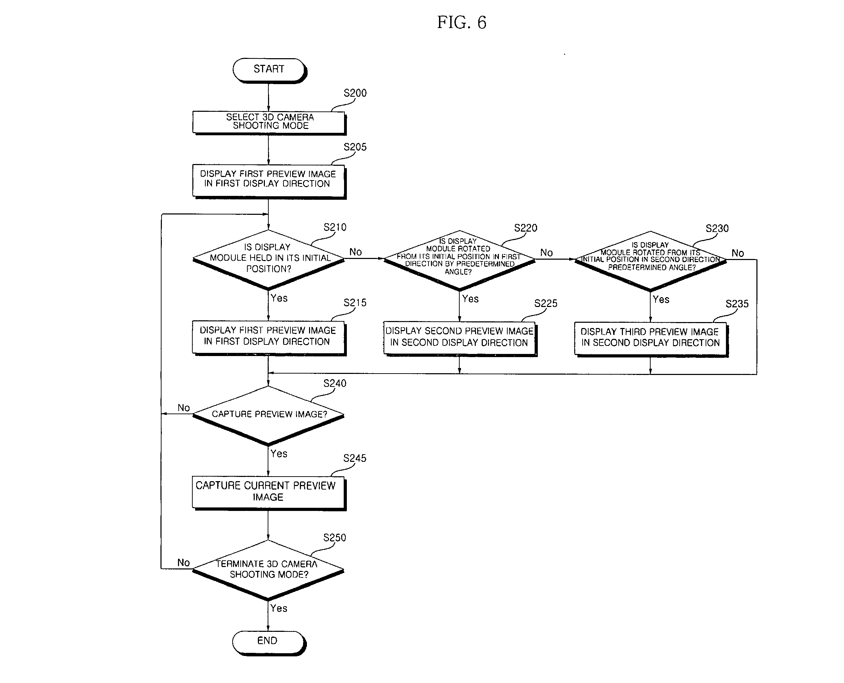

FIG. 6 illustrates a flowchart of a method of controlling a mobile terminal according to a first exemplary embodiment of the present invention. In the first exemplary embodiment, a multi-view display capable of providing a plurality of screens at the same time by displaying the screens in different display directions may be used as the display module 151, and thus, the user may be able to view different screens from the display module 151 from different viewing angles.

Referring to FIG. 6, if a 3D camera shooting mode is selected in response to, for example, a user command (S200), the controller 180 may display a first preview image of a subject on the display module 151 in a first display direction (S200).

The first display direction may be a direction perpendicular to the surface of the display module 151, and may corresponding to the front viewing zone a of FIG. 4(b). When the display module 151 is held in its initial position, the first preview image may be displayed in the first display direction.

The first preview image may be displayed along with a menu icon related to camera shooting and an icon indicating the operating state of the camera 121.

If the display module 151 maintains its initial position (S210), the controller 180 may maintain the first preview image to be displayed in the first display direction (S215). On the other hand, if measurement data provided by the motion sensor 145 indicates that the display module 151 has been rotated in a first direction (e.g., counterclockwise) from its initial position by more than a predetermined amount (S220), the controller 180 may display a second preview image of the subject on the display module 151 in a second display direction (S225).

If the measurement data provided by the motion sensor 145 indicates that the display module 151 has been rotated in a second direction (e.g., clockwise) from its initial position by more than the predetermined amount (S230), the controller 180 may display a third preview image of the subject on the display module 151 in a third display direction (S235).

The second display direction may be a direction obtained by rotating the display module 151 counterclockwise from the first display direction by a predetermined amount, and may correspond to the left viewing zone b of FIG. 4(b). The third display direction may be a direction obtained by rotating the display module 151 clockwise from the first display direction by the predetermined amount, and may correspond to the right viewing zone c of FIG. 4(b). Thus, the user may view a preview image of the right side or the left side of the subject simply by rotating the display module 151 clockwise or counterclockwise without the need to move from one position to another.

Thereafter, if the user chooses to capture an image of the subject (S240), the controller 180 may control the camera 121 to capture the first, second or third preview image (S245). Data regarding the captured image may be stored in the memory 160. The first through third preview images may be stored together in the memory 160. Thus, if the user chooses to view a captured image of the subject, the captured first through third preview images may be displayed on the display module 151 at the same time.

Operations S210 through S245 may be repeatedly performed until the user chooses to terminate the 3D camera shooting mode (S250).

In this manner, it is possible to view and capture the preview images of the front side, the left side and the right side of the subject simply by rotating the mobile terminal 100 without the need to move from one position to another.

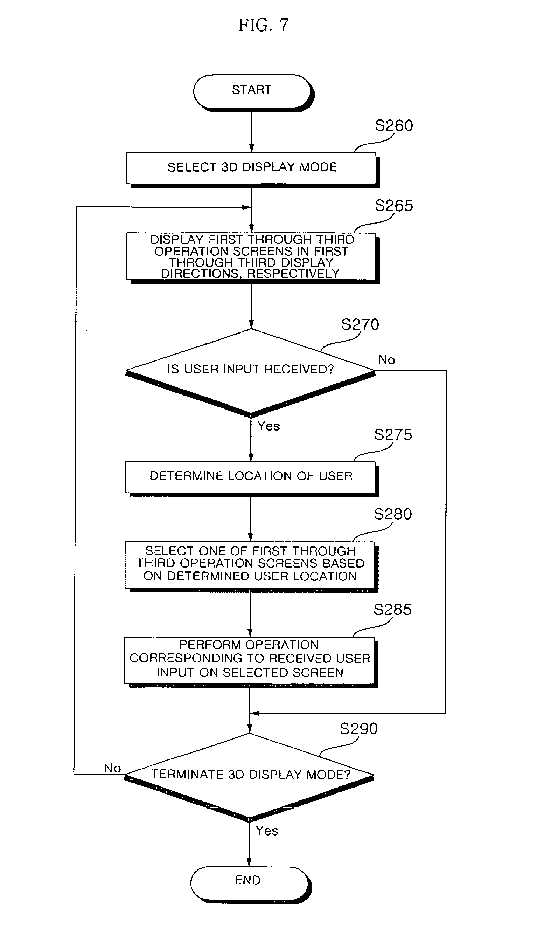

FIG. 7 illustrates a flowchart of a method of controlling a mobile terminal according to a second exemplary embodiment of the present invention. In the second exemplary embodiment, a multi-view display capable of providing a plurality of screens at the same time by displaying the screens in different display directions may be used as the display module 151, and thus, the user may be able to view different screens from the display module 151 from different viewing angles.

Referring to FIG. 7, if a 3D display mode is selected in response to, for example, a user command (S260), the controller 180 may display first through third operation screens on the display module 151 in first through third display directions, respectively (S265). The user may choose what operation screens to display in advance.

If a user input is received through the display module 151 (S270), the controller 180 may determine the relative position of the user to the mobile terminal 100 based on data provided by the motion sensor 145 regarding the motion of the display module 151 and data provided by an optical sensor regarding the slope of the display module 151 (S275).

Thereafter, the controller 180 may select one of the first through third operation screens based on the result of the determination performed in operation S275 (S280), and the controller 180 may perform an operation corresponding to the received user input on the selected operation screen (S285).

Operations S265 through S285 may be repeatedly performed until the user terminates the 3D display mode (S290).

In this manner, it is possible to perform a desired operation on any one of a plurality of screens displayed on the display module 151 simply by rotating the display module 151 without the need to manually navigate from one screen to another screen.

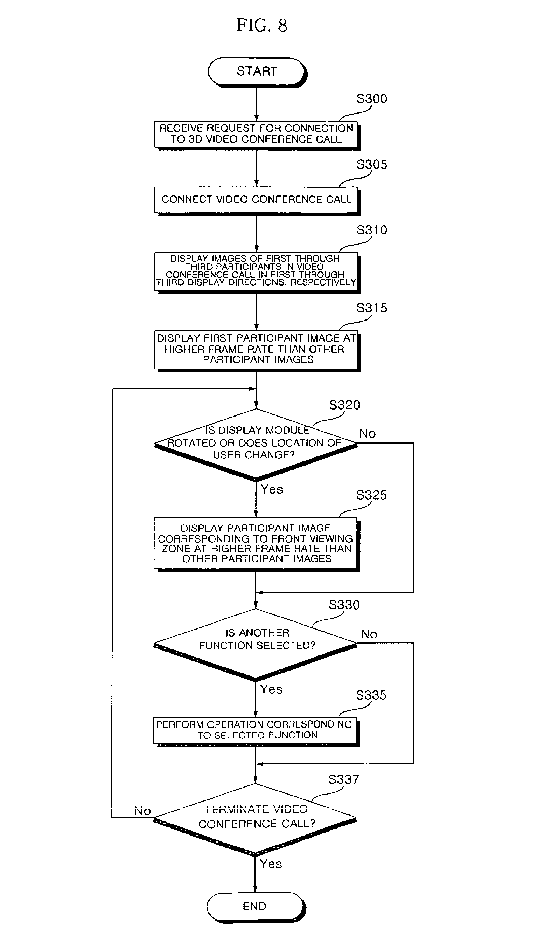

FIG. 8 illustrates a flowchart of a method of controlling a mobile terminal according to a third exemplary embodiment of the present invention. In the third exemplary embodiment, like in the first and second exemplary embodiments, a multi-view display capable of providing a plurality of screens at the same time by displaying the screens in different display directions may be used as the display module 151, and thus, the user may be able to view different screens from the display module 151 from different viewing angles.

Referring to FIG. 8, if a 3D video call connection request is issued in response to, for example, a user command (S300), the controller 180 may control the wireless communication unit 110 to connect a video conference call (S305).

Thereafter, the controller 180 may display the images of first through third participants in the video conference call on the display module 151 in first through third display directions, respectively (S310). The first display direction may be a direction perpendicular to the surface of the display module 151, and may correspond to the front viewing zone a of FIG. 4(b). The second display direction may be a direction obtained by rotating the display module 151 counterclockwise from the first display direction by a predetermined amount, and may correspond to the left viewing zone b of FIG. 4(b). The third display direction may be a direction obtained by rotating the display module 151 clockwise from the first display direction by the predetermined amount, and may correspond to the right viewing zone c of FIG. 4(b).

The controller 180 may display the image of the first participant at a normal frame rate and the images of the second and third participants at a frame rate lower than the normal frame rate (S315). For example, the controller 180 may display the image of the first participant at 30 frames per second and the images of the second and third participants at 15 frames per second, thereby reducing the processing load.

Thereafter, the controller 180 may determine whether the display module 151 has been rotated clockwise or counterclockwise, or whether the position of the user has changed (S320). If it is determined in operation S320 that the display module 151 has been rotated clockwise or counterclockwise, or that the position of the user has changed, the controller 180 may control the image of the first participant to be displayed at a higher frame rate than the images of the second and third participants (S325). The controller 180 may determine whether the display module 151 has been rotated based on measurement data provided by the motion sensor 145. In addition, the controller 180 may determine the relative position of the user to the mobile terminal 100 based on data provided by the motion sensor 145 regarding the motion of the display module 151 and data provided by an optical sensor regarding the slope of the display module 151.

If a video call-related function other than connecting a video call is selected (S330), the controller 180 may control an operation corresponding to the selected function to be performed (S335).

Operations S320 through S335 may be repeatedly performed until the user chooses to terminate the video conference call (S337).

In this manner, it is possible to display the images of multiple participants in a video conference call at the same time on the display module 151 and to allow the user to selectively view each of the images of the multiple participants according to the location angle of the user.

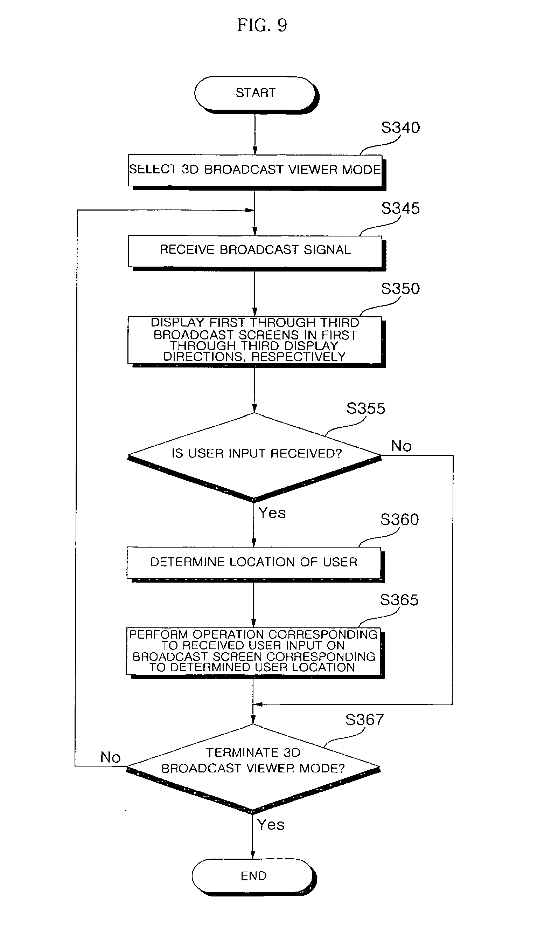

FIG. 9 illustrates a flowchart of a method of controlling a mobile terminal according to a fourth exemplary embodiment of the present invention. In the fourth exemplary embodiment, like in the first through third exemplary embodiments, a multi-view display capable of providing a plurality of screens at the same time by displaying the screens in different display directions may be used as the display module 151, and thus, the user may be able to view different screens from the display module 151 from different viewing angles.

Referring to FIG. 9, if a 3D broadcast viewer mode is selected in response to, for example, a user command (S340), the controller 180 may receive a broadcast signal from a broadcast channel selected by the user (S345), and may display first through third broadcast screens obtained by demodulating the received broadcast signal on the display module 151 in first through third display directions, respectively (S350). The user may select what broadcast screens to display in advance.

The controller 180 may display the first broadcast screen at a normal frame rate and the second and third broadcast screens at a frame rate lower than the normal frame rate in order to reduce the processing load. The controller 180 may output an audio signal corresponding to the first broadcast screen via the audio output module 157 and audio signals corresponding to the second and third broadcast screens via remote earphones such as a Bluetooth headset.

If a user input is received through the display module 151 (S355), the controller 180 may determine the relative position of the user to the mobile terminal 100 (S360). More specifically, the controller 180 may determine the relative position of the user to the mobile terminal 100 based on based on data provided by the motion sensor 145 regarding the motion of the display module 151 and data provided by an optical sensor regarding the slope of the display module 151.

Thereafter, the controller 180 may select one of the first through third broadcast screens based on the result of the determination performed in operation S360, and may perform an operation corresponding to the received user input on the selected broadcast screen, e.g., the first broadcast screen (S365). The controller 180 may change the frame rate at which each of the first through third broadcast screens is displayed according to the relative position of the user to the mobile terminal 100.

Operations S345 through S365 may be repeatedly performed until the user chooses to terminate the 3D broadcast viewer mode (S367)

In this manner, it is possible to selectively view and perform various operations on any one of a plurality of broadcast screens displayed on the display module 151 without the need to manually navigate from one broadcast screen to another broadcast screen.

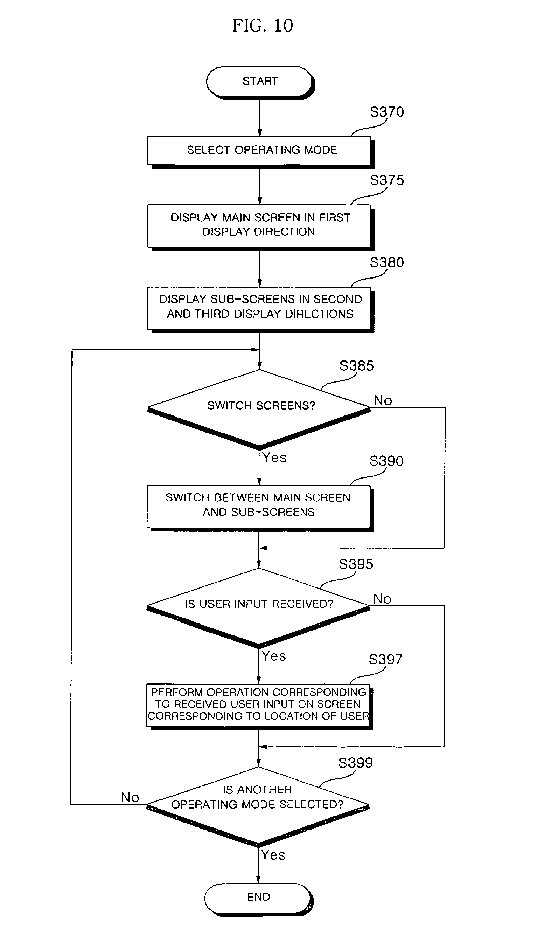

FIG. 10 illustrates a flowchart of a method of controlling a mobile terminal according to a fifth exemplary embodiment of the present invention. In the fifth exemplary embodiment, like in the first through fourth exemplary embodiments, a multi-view display capable of providing a plurality of screens at the same time by displaying the screens in different display directions may be used as the display module 151, and thus, the user may be able to view different screens from the display module 151 from different viewing angles.

Referring to FIG. 10, if an operating mode is selected in response to, for example, a user command (S370), the controller 180 may display a first screen on the display module 151 in a first display direction (S375). The controller 180 may display second and third screens on the display module 151 in second and third display directions, respectively (S380).

The first screen may be a main screen corresponding to the selected operating mode, and the second and third screens may be sub-screens corresponding to the selected operating mode. The first display direction may be a direction perpendicular to the surface of the display module 151, and may correspond to the front viewing zone a of FIG. 4(b). The second display direction may be a direction obtained by rotating the display module 151 counterclockwise from the first display direction by a predetermined amount, and may correspond to the left viewing zone b of FIG. 4(b). The third display direction may be a direction obtained by rotating the display module 151 clockwise from the first display direction by the predetermined amount, and may correspond to the right viewing zone c of FIG. 4(b).

If the user chooses to switch screens (S385), the controller 180 may change the display direction of the display module 151 (S390) so as to switch between the first through third screens. More specifically, the controller 180 may switch between the first through third screens in response to the reception of a touch-and-drag input via the display module 151, the tilting of the display module 151, or the reception of a key input via the user input unit 130.

If a user input is received through the display module 151 (S395), the controller 180 may determine the relative position of the user to the mobile terminal 100, may select one of the first through third screens based on the result of the determination, and may perform an operation corresponding to the received user input on selected screen, e.g., the first screen (S397). More specifically, the controller 180 may determine the relative position of the user to the mobile terminal 100 based on data provided by the motion sensor 145 regarding the motion of the display module 151 and data provided by an optical sensor regarding the slope of the display module 151.

Operations S385 through S397 may be repeatedly performed until the user selects another operating mode (S399).

In this manner, it is possible to perform various operations on any one of a plurality of screens displayed on the display module 151 by appropriately varying the viewing angle of the display module 151.

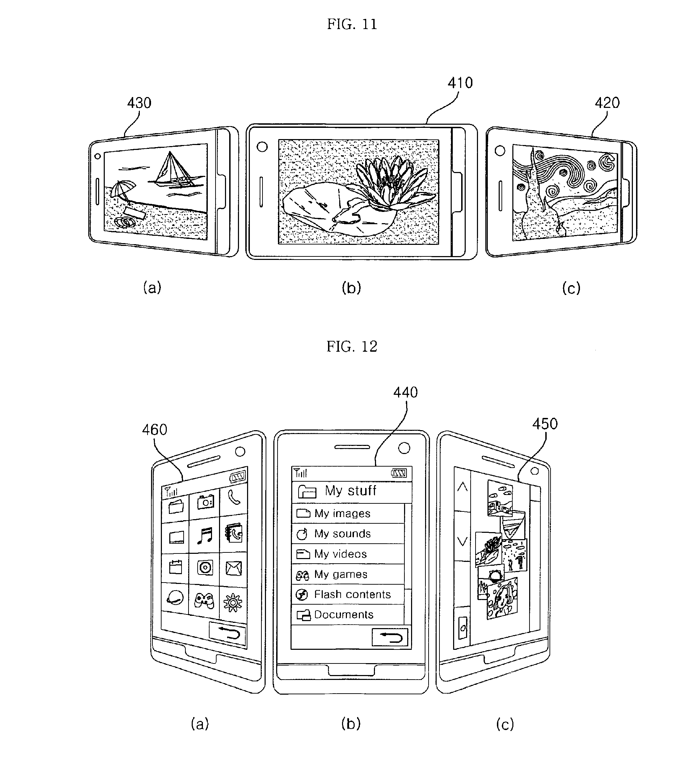

The first through fifth exemplary embodiments will hereinafter be described in further detail with reference to FIGS. 11 through 33.

FIGS. 11 through 14 illustrate various screens that can be displayed by a multi-view display. Referring to FIG. 11, an image viewer screen 410 showing a first image, an image viewer screen 420 showing a second image and an image viewer screen 430 showing a third image may be displayed at the same time in first, second and third display directions, respectively. The display module 151 may provide a plurality of images at the same time by displaying the images in different display directions. Then, the user can view each of the images in a full-view mode simply by varying the viewing angle of the display module 151.

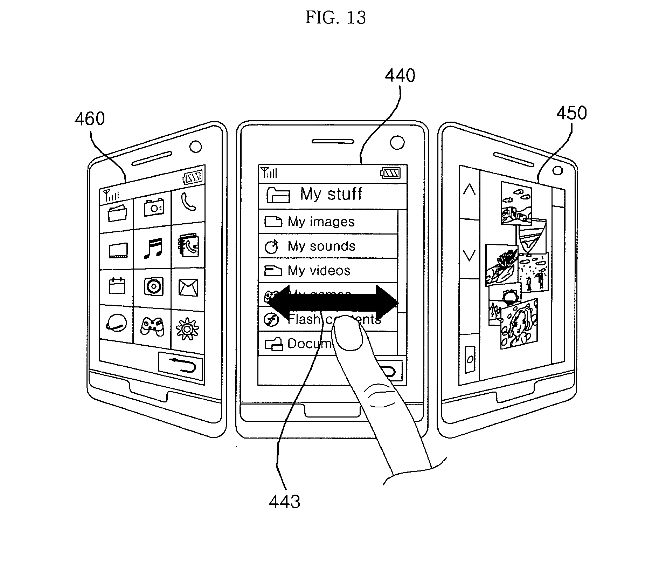

FIGS. 12 and 13 illustrate how to display a plurality of menu screens in different display directions. Referring to FIG. 12, a menu screen 440 showing a first list of menus, a menu screen 450 showing a second list of menus and a menu screen 460 showing a third list of menus may be displayed at the same time in first, second and third display directions, respectively. The menu screen 440 may be a main menu list, and the menu screens 450 and 460 may be sub-screens of the menu screen 440. In this manner, it is possible to easily switch between the menu screens 440, 450 and 460 simply by varying the viewing angle of the display module 151.

Referring to FIG. 13, if the user touches and drags the menu screen 440 laterally, as indicated by reference numeral 443, if the display module 151 is tilted to the left or to the right, or if a key input is received via the user input unit 130, the controller 180 may switch from the menu screen 440 to the menu screen 450 or 460.

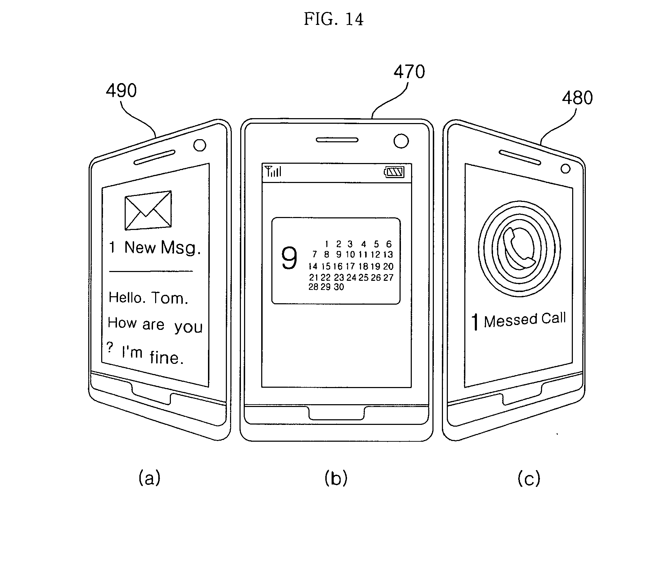

FIG. 14 illustrates how to display a plurality of screens representing different operating states at the same time on the display module 151 in different directions. Referring to FIG. 14, an idle screen 470 may be displayed in a first display direction, and a screen 480 indicating the existence of missed calls and a screen 490 indicating that the reception of messages may be displayed in second and third display directions, respectively. Thus, the user may easily identify events occurring in the mobile terminal 100 from the display module 151 simply by varying the viewing angle of the display module 151.

When using a multi-view display as the display module 151, it is possible to easily identify various information from the display module 151 simply by varying the viewing angle of the display module 151 without the need to manually switch screens. For example, three or more calendar or scheduler screens can be displayed at the same time on a multi-view display, whereas only one calendar or scheduler screen (for example, a daily, weekly, monthly, and yearly calendar or scheduler screen) can be displayed at a time on a typical display.

Various indicator icons indicating the operating state of a mobile terminal or representing additional information are generally displayed in a small size at the top of a display. On the other hand, when displayed on a multi-view display, the indicator icons can appear larger on a main screen, which is displayed on the multi-view display in a first display direction, than on a sub-screen, which is displayed on the multi-view display in a second or third display direction. Thus, it is possible to improve the efficiency of use of the main screen.

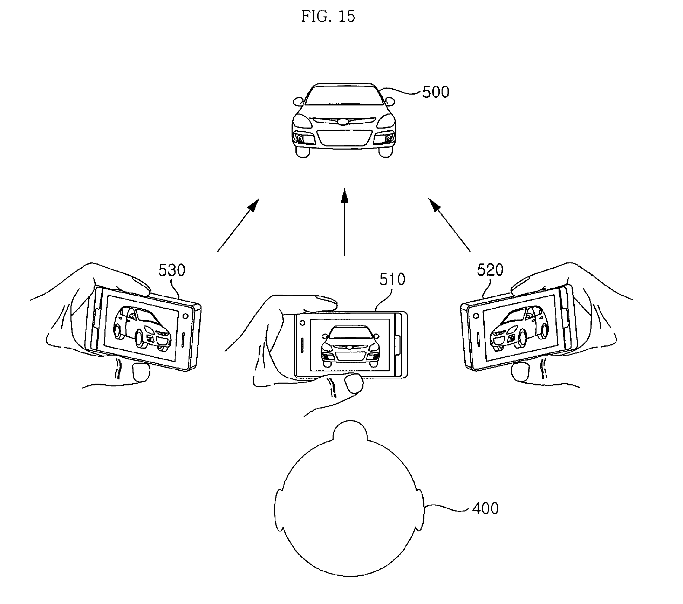

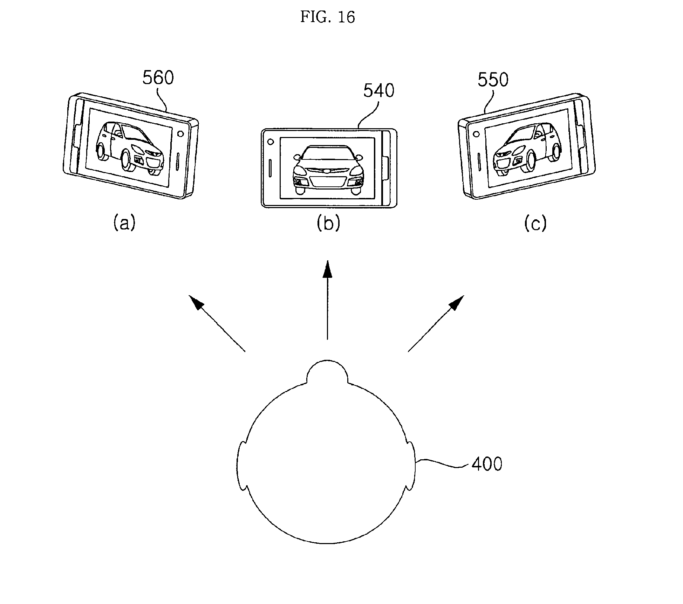

FIGS. 15 and 16 illustrate how to control the mobile terminal 100 in a 3D camera shooting mode. Referring to FIG. 15, if the 3D camera shooting mode is selected when the mobile terminal 100 is held in its initial position, a preview image 510 of the front side of a subject 500 may be displayed on the display module 151 in a first display direction. If the mobile terminal 100 is rotated counterclockwise from its initial position by a predetermined amount, a preview image 520 of the right side of the subject 500 may be displayed on the display module 151 in a second display direction. If the mobile terminal 100 is rotated clockwise from its initial position by a predetermined amount, a preview image 530 of the left side of the subject 500 may be displayed on the display module 151 in a third display direction.

Therefore, a viewer 400 may capture a preview image of the front side of the subject 500 when the mobile terminal 100 is held in its initial position, and may then capture a preview image of the left side or the right side of the subject 500 simply by rotating the mobile terminal 100 clockwise or counterclockwise. The captured preview images may be stored together in the memory 160.

Referring to FIG. 16, if a 3D viewer mode is selected, an image 540 of the front of the subject 500, an image 550 of the right side of the subject 500 and an image 560 of the left side of the subject 500 may be displayed in the first, second and third display directions, respectively. Thus, the user can view each of the images 540, 550 and 560 simply by rotating the mobile terminal 100.

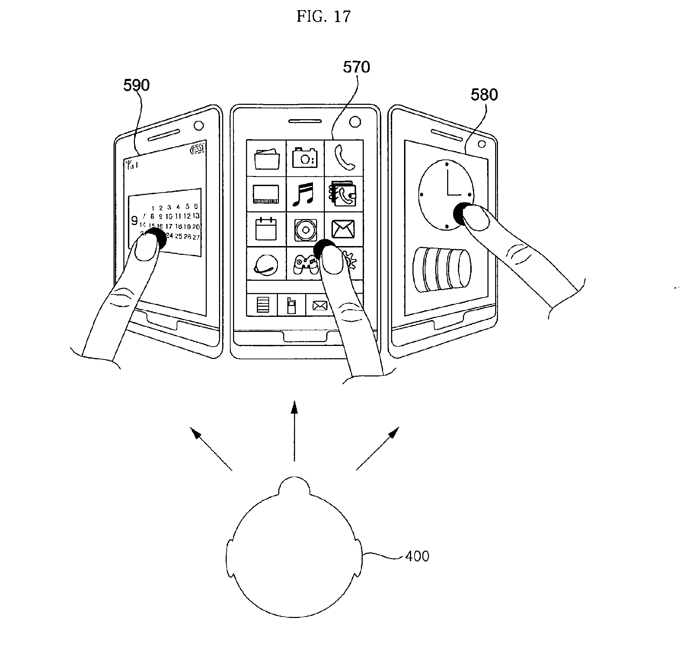

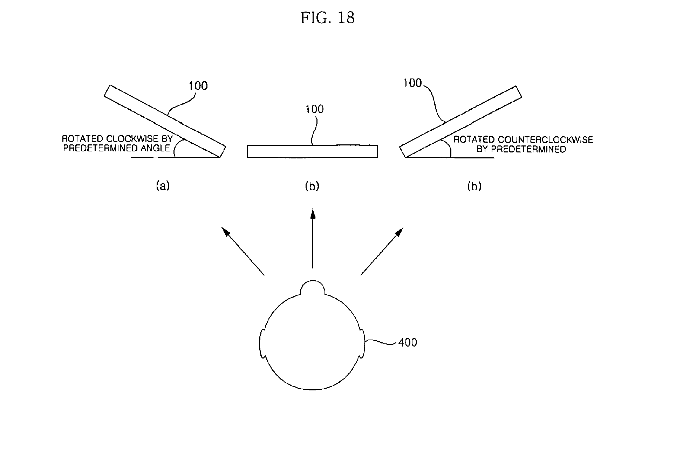

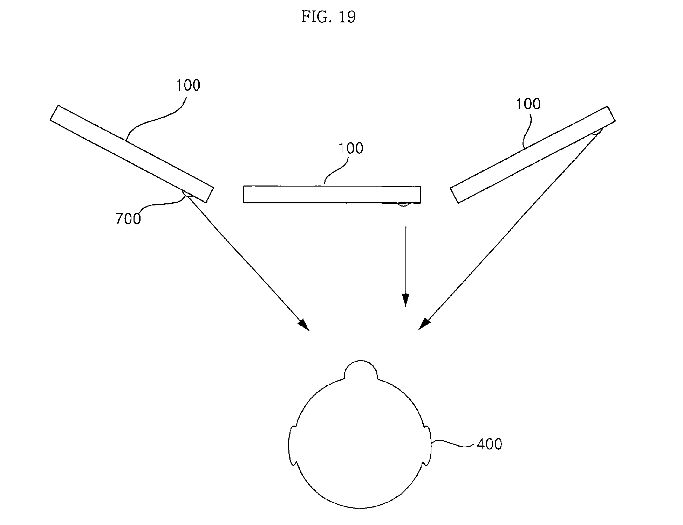

FIGS. 17 through 19 illustrate how to select and execute one of a plurality of objects displayed on the display module 151. Referring to FIG. 17, first, second and third operation screens 570, 580 and 590 may be displayed at the same time in first, second and third display directions, respectively. Thereafter, if a touch input is received through the display module 151, it may be determined which of the first, second and third operation screens 570, 580 and 590 is currently being viewed by the viewer 400 using a motion sensor (such as a gyro-sensor) or an optical sensor. Thereafter, an operation corresponding to the received touch input may be performed on whichever of the first, second and third operation screens 570, 580 and 590 is determined to be currently being viewed by a viewer 400. It will hereinafter be described in further detail, with reference to FIGS. 18 and 19, how to determine which of the first, second and third operation screens 570, 580 and 590 is currently being viewed by the viewer 400.

Referring to FIG. 18, it may be determined which of the first, second and third operation screens 570, 580 and 590 is currently being viewed by the viewer 400 using a motion sensor such as a gyro-sensor. More specifically, if the mobile terminal 100 is rotated clockwise by a predetermined amount, as shown in FIG. 18(a), it may be determined that the viewer 400 is on the right side of the mobile terminal 100. Then, if the viewer touches the screen of the mobile terminal 100 or presses a key displayed on the display module 151, one of a plurality of objects displayed on the third operation screen 620 may be selected, and an operation corresponding to the selected operation may be performed.

Alternatively, referring to FIG. 19, it may be determined which of the first, second and third operation screens 570, 580 and 590 is currently being viewed by the viewer 400 using an optical sensor 700. The optical sensor 700 may measure the slope of the mobile terminal 100 with respect to the viewer 400, and may determine whether the user is in front of or on the left or right side of the mobile terminal 100 based on the result of the measurement. Thereafter, it may be determined which of the first, second and third operation screens 570, 580 and 590 is currently being viewed by the viewer 400 based on the results of the determination performed by the optical sensor 700. In this manner, it is possible to perform an operation corresponding to each object displayed on whichever of the first, second and third operation screens 570, 580 and 590 is currently being viewed by the viewer 400.

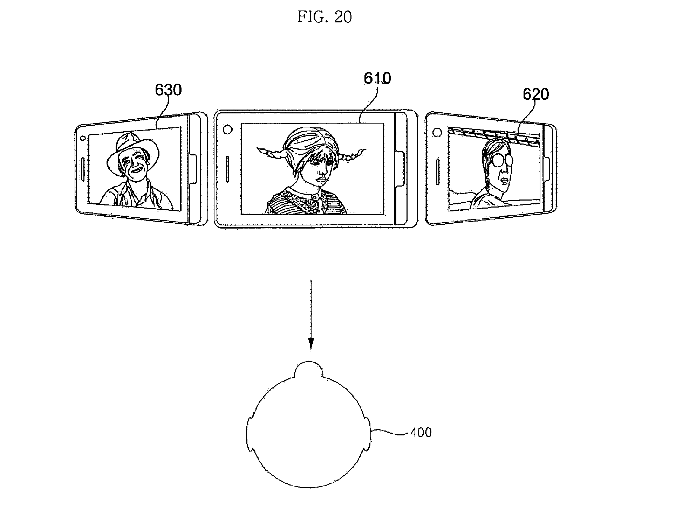

FIGS. 20 through 23 illustrate how to control the mobile terminal in a 3D video call mode. Referring to FIG. 20, if the 3D video call mode is selected and a video call is connected, a screen 610 showing the image of a first participant in the video call, a screen 620 showing the image of a second participant in the video call, and a screen 630 showing the image of a third participant in the video call may be displayed at the same time in first, second and third display directions, respectively. Thus, a viewer 400 may engage in the video call while selectively viewing the images of the first, second and third participants in the video call simply by varying the viewing angle of the display module 151. The screen 510 may be displayed at a normal frame rate, and the screens 520 and 530 may be displayed at a frame rate lower than the normal frame rate. In this manner, it is possible to reduce the processing load.

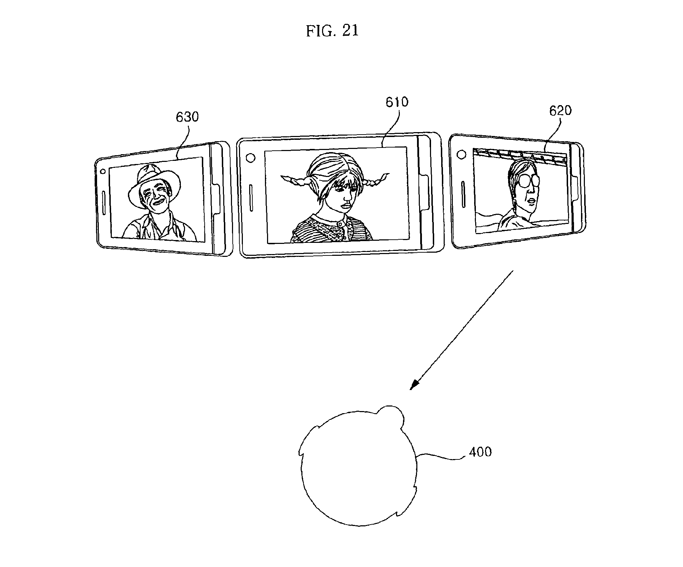

Referring to FIG. 21, when the viewer 400 attempts to vary the viewing angle of the display module 151 and thus to view a screen 620 showing the image of the second participant, the screen 620 may be displayed at the normal frame rate, and a screen 610 showing the image of the first participant and a screen 630 showing the image of the third participant may be displayed at a frame rate lower than the normal frame rate. That is, whichever of the screens 610, 620 and 630 is currently being viewed by the viewer 400 may be displayed at the normal frame rate, and the other screens may be displayed at a frame rate lower than the normal frame rate.

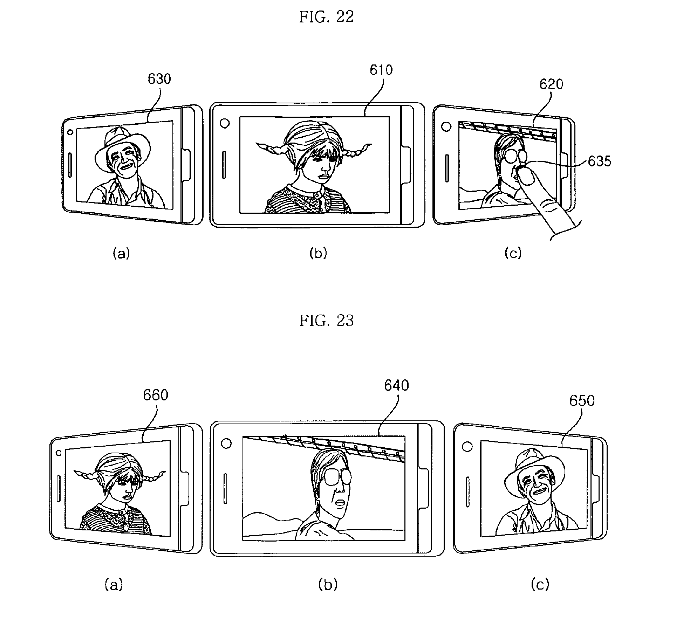

Referring to FIG. 22, if a touch input 635 is received through the display module 151, it may be determined, based on the relative position of the viewer 400 to the mobile terminal 100, which of the first through third participants has been selected by the viewer 400. Thereafter, referring to FIG. 23, a screen showing the image of one of the first through third participants determined to have been selected by the viewer 400 may be displayed in the first display direction.

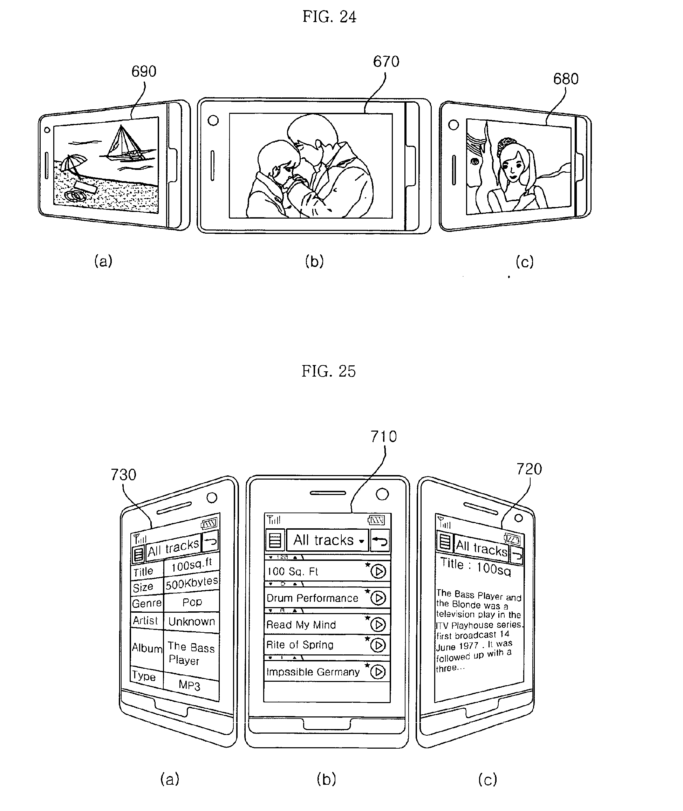

FIG. 24 illustrates how to control the mobile terminal 100 in a 3D broadcast viewer mode. Referring to FIG. 24, first, second and third broadcast screens 670, 680 and 690 may be displayed at the same time in first, second and third display directions, respectively. Thus, the user can selectively view each of the first, second and third broadcast screens 670, 680 and 690 simply by varying the viewing angle of the display module 151.

If a user input such as a touch input is received through the display module 151, it may be determined which of the first, second and third broadcast screens 670, 680 and 690 is currently being viewed by the user using a motion sensor (such s a gyro-sensor) or an optical sensor, and an operation corresponding to the received user input may be performed on whichever of the first, second and third broadcast screens 670, 680 and 690 is determined to be currently being viewed by the user.

FIG. 25 illustrates how to control the mobile terminal 100 in a music play mode. Referring to FIG. 25, if the music play mode is selected, a screen 710 showing a playlist including a song currently being played, a screen 720 showing the lyrics of the song, and a screen 730 showing ID3 Tag information specifying the title and the singer(s) of the song and the title of the album including the song may be displayed at the same time in first, second and third display directions, respectively.

In this manner, it is possible to improve the efficiency of use of the display region on the display module 151 by displaying a playlist, the lyrics of a song and ID3 Tag information regarding the song at the same time using a multi-view display. When the user places his or her finger near each music file in the playlist of the screen 710, lyric information and ID3 Tag information regarding a corresponding music file may be displayed in the second or third display direction. Thus, the user can easily identify information regarding each music file in the playlist of the screen 710.

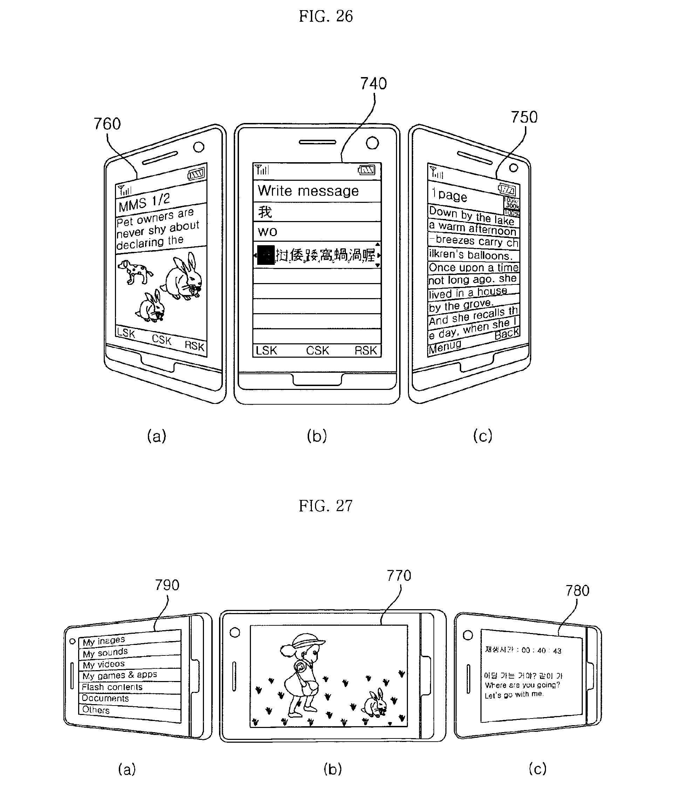

FIG. 26 illustrates how to control the mobile terminal 100 in a text-editing mode such as a mode for writing an email or text message. Referring to FIG. 26, in the text editing mode, a screen 740 showing a current page of an email or text message currently being written, a screen 750 a previous page of the email or text message, and a screen 760 showing a received email or text message may be displayed at the same time in first, second and third display directions, respectively.

Thus, the user can instantly check an incoming email or text message from the screen 760 and can thus easily write a reply email or text message. In addition, the user can instantly check a previous page, if any, of an email or text message currently being written from the screen 750 and can thus effectively write long email or text messages.

If an email or text message to be displayed on the display module 151 is two or more pages long, an icon representing each of the pages of the email or text message may be displayed on the display module 151. Then, if one of the icons is selected, a page of the email or text message corresponding to the selected icon may be displayed in the second or third display direction.

FIG. 27 illustrates how to control the mobile terminal 100 in a moving image file play mode. Referring to FIG. 27, if the moving image file play mode is selected, a screen 770 showing a moving image file currently being played, a screen 780 showing the subtitles of the moving image file, and a screen 790 showing a list of other moving image files may be displayed at the same time in first, second and third display directions, respectively.

If the user chooses to watch the moving image file without the subtitles, the subtitles may be displayed in a different display direction from the moving image file. In this case, since the screen 780 is sometimes too large to simply display the subtitles, part of the screen 780 where the subtitles are not displayed may be used for language learning purposes.

In this manner, the user can easily identify the moving image file currently being played and a list of other moving files stored in the mobile terminal 100. Referring to FIG. 27, runtime information of the moving image file currently being played, instead of a progressive bar, may be displayed on the screen 780 along with the subtitles.

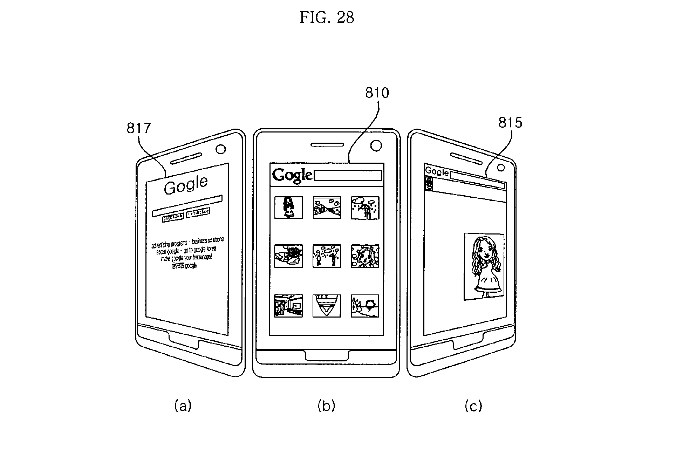

FIGS. 28 through 30 illustrate how to control the mobile terminal 100 in a web-access mode. Referring to FIG. 28, if the web-access mode is selected, a screen 810 showing a current webpage, a screen 815 showing a previous webpage and a screen 817 showing a subsequent webpage may be displayed at the same time in first, second and third display directions, respectively.

In this manner, the user can easily navigate from one webpage to another webpage simply by varying the viewing angle of the display module 151. In addition, even if a cache is inactivated, it is possible to prevent unnecessarily frequent access to the web and thus to reduce the web-access charges.

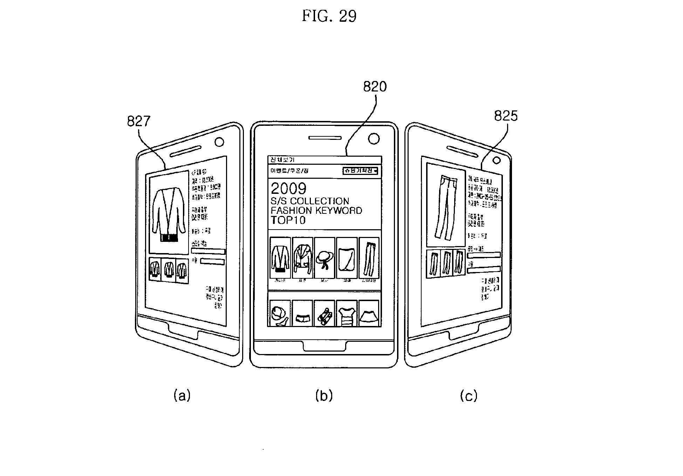

Alternatively, in the web-access mode, a screen 820 showing a current webpage may be displayed in the first display direction, and screens 825 and 827 each showing a webpage registered as a Favorite may be displayed in the second and third display directions, respectively, as shown in FIG. 29. That is, when one or more webpages worth revisiting are encountered while surfing on the internet with the mobile terminal 100, the user may display the webpages on the screens 825 and 827, and may continue to surf on the internet through the screen 820.

In this manner, the user can compare a plurality of webpages with one another while surfing on the web, and can easily navigate from one webpage to another webpage. Thus, it is possible to improve user convenience regarding web surfing.

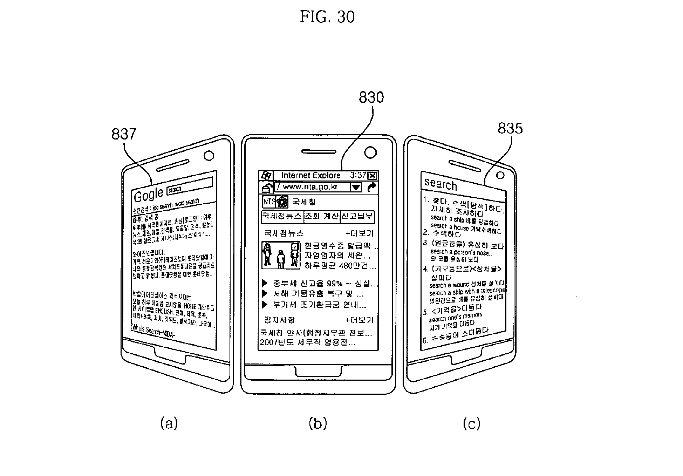

FIG. 30 illustrates how to provide a search function during web surfing. Referring to FIG. 30, a screen 830 showing a current webpage may be displayed in a first display direction. Then, when an interesting word or phrase is encountered from the screen 830, the user may simply drag and drop the word or phrase on a screen 835 displayed in a second direction or a screen 837 displayed in a third direction and may thus be able to look up the word or phrase in a web-search engine or a dictionary set in the screen 835 or 837. For this, a web-search page or a dictionary page may be displayed in an offline state in the second or third display direction. Then, when a word or phrase is dragged and dropped on the search page or the dictionary page, the web-search page or the dictionary page may be placed in an online state.

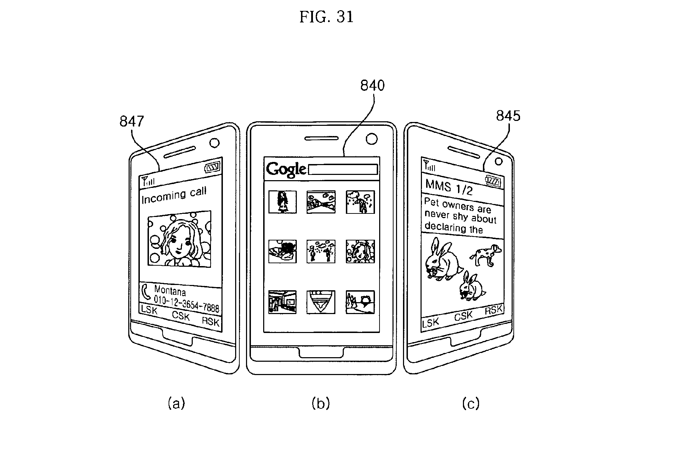

FIG. 31 illustrates how to check an incoming text message or an incoming call in a predetermined operating mode using a multi-view display. Referring to FIG. 31, if an incoming text message or an incoming call is received while performing a predetermined operation (such as surfing on the web, watching a broadcast program or a moving image or viewing images) through a screen 840, which corresponds to a current operating mode and is displayed in a first display direction, a screen 845 or 847 showing the incoming text message or the incoming call may be displayed in a second or third display direction, thereby allowing the user to continue to perform the predetermined operation through the screen 840.

Alternatively, if an incoming text message or an incoming call is received while performing the predetermined operation through the screen 840, an icon indicating the existence of the incoming text message or the incoming call may be displayed on the screen 840. Then, if the icon is dragged laterally by the user, the screen 845 or 847 may be displayed in the second or third display direction.

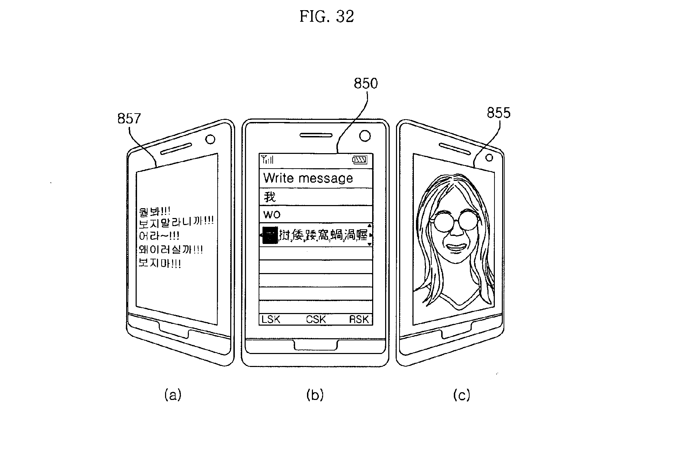

FIG. 32 illustrates how to perform a privacy protection function using a multi-view display. Referring to FIG. 32, in order to protect privacy in public places or at public transportation, a screen 850 corresponding to a current operating mode may be displayed in a first display direction, and screens 855 and 857 each showing a dummy image or a default image selected by the user may be displayed in second and third display directions, respectively.

In this manner, it is possible to effectively protect the privacy of the user.

A multi-view display may be used to control various operations performed by the mobile terminal 100. For example, for the purpose of learning English, the user may display English text in a first display direction, and may display a Korean translation of the English text and the definitions of keywords in the English text in a second or third display direction as reference materials for reading the English text. Alternatively, a screen showing a dictionary or automatic translation program may be displayed in the second or third display direction. Then, the user can be provided with the definition or a quick translation of the word or phrase simply by dragging and dropping the word or phrase onto the screen.

In addition, a multi-view display may be used for two or more individuals to play a game such as a baseball game or a quiz game that requires the game players not to share some information with the mobile terminal 100. For example, in the case of playing a baseball game with the mobile terminal 100, a main game screen showing basic information (such as the runs scored) that needs to be shared between the game players may be displayed in a first display direction, and a pitcher screen for throwing a ball and a hitter screen for hitting a thrown ball may be displayed in second and third display directions, respectively. In the case of playing a quiz game with the mobile terminal 100, a main screen showing basic information (such as the points made by each contestant) may be displayed in the first display direction, a screen showing quizzes and hints for the quizzes may be displayed in the second display direction, and a screen showing the correct answers to the quizzes may be displayed in the third display direction.

Moreover, a multi-view display may be used in an image viewer mode. In the image viewer mode, a predetermined image may be displayed in a first display direction, and the thumbnail images or information of the predetermined image, an image previous to the predetermined image and an image subsequent to the predetermined image may be displayed in a second or third display direction.

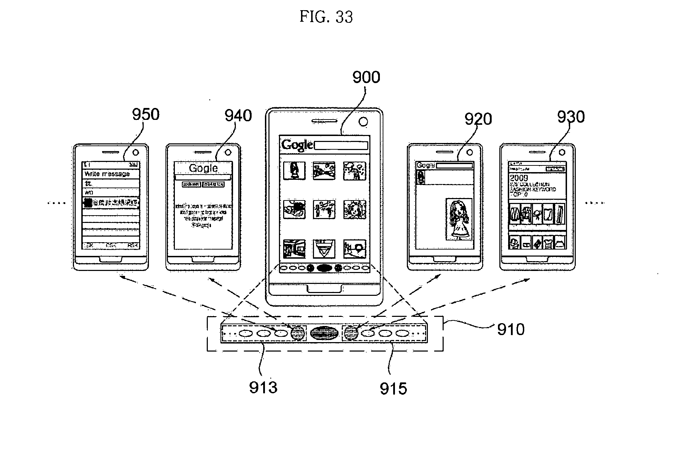

FIG. 33 illustrates how to display a previously-registered screen in a second or third display direction. Referring to FIG. 33, when there are one or more previously-registered screens that can be displayed in a second or third display direction in a predetermined operating mode, an icon group 910 may be displayed on a screen 900 displayed in a first display direction. The icon group 910 may include a plurality of icons 913 representing a plurality of previously-registered screens (such as screens 940 and 950) that can be displayed in the second display direction and a plurality of icons 915 representing a plurality of previously-registered screens (such as screens 920 and 930) that can be displayed in the third display direction. The arrangement of the previously-registered screens 920, 930, 940 and 950 may be changed by changing the arrangement of the icons in the icon group 910. If one of the icons included in the icon group 910 is selected, a previously-registered screen corresponding to the selected icon may be displayed in the second or third display direction. More specifically, if the user places his or her finger near and thus selects one of the icons included in the icon group 910, a previously-registered screen corresponding to the selected icon may be displayed in the second or third display direction.

The mobile terminal according to the present invention and the method of controlling the mobile terminal according to the present invention are not restricted to the exemplary embodiments set forth herein. Therefore, variations and combinations of the exemplary embodiments set forth herein may fall within the scope of the present invention.

The present invention can be realized as code that can be read by a processor (such as a mobile station modem (MSM)) included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to provide a plurality of screens at the same time by displaying the screens on a multi-view display in different display directions. Thus, it is possible to view different screens from different viewing angles.

In addition, according to the present invention, it is possible to display the images of multiple participants in a video call at the same time on a multi-view display in different display directions. Thus, it is possible to selectively view the images of the multiple participants simply by varying the viewing angle of the multi-view display.

Moreover, according to the present invention, it is possible to display a plurality of broadcast screens at the same time on a multi-view display in different display directions. Thus, it is possible to quickly perform various operations on each of the broadcast screens simply by varying the viewing angle of the multi-view display without the need to switch between the broadcast screens.

Furthermore, according to the present invention, it is possible to display various screens corresponding to a predetermined operating mode at the same time on a multi-view display in different display directions. Thus, it is possible to view the various screens and control various operations corresponding to the predetermined operating mode simply by varying the viewing angle of the multi-view display.

According to still further embodiments, consider the scenario in which a user views a center screen while the device displays second and third screens viewable on either side of the center screen. An example of this is shown in Fig. 22. In the present embodiment, a user may be permitted to select a displayed object (e.g., image) that is beyond the viewing boundary of the center screen, such as the right-most screen, and then drag the object to the center and/or left most-most screen. As such, the device may therefore function as an extended desktop or operating platform, viewable in discrete screens but permitting object manipulation among and between the screens.

One alternative to the just-described extended desktop example is to permit context switching between and among the screens. In this embodiment, a user may drag the screen, and any related content, icons, etc., from a first screen to a second screen. As a result, the content from the first screen is switched to being displayed on the second screen, and the content from the second screen is switched to so that it displayed on the first screen.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A display method for a terminal, the method comprising:
displaying simultaneously, on a single display, a plurality of screens in a corresponding plurality of spatially different directions;
displaying an item on a first screen of the plurality of screens;
receiving user input at the terminal with regard to the item; and
displaying item information on a second screen of the plurality of screens responsive to the receiving of the user input, wherein the item information comprises information relating to the item.

2. The method according to claim 1, wherein the display comprises a touch screen display configured to receive the user input, the method further comprising:
receiving the user input at the touch screen display.

3. The method according to claim 1, wherein the terminal comprises an input key configured to receive the user input, the method further comprising:
selecting the item responsive to receiving the user input to the input key; and
performing the displaying the item information after the selecting.

4. The method according to claim 1, wherein the item is one of a calendar date, a thumbnail image, or a menu item.

5. The method according to claim 1, wherein the item information is one of schedule information for a date of a calendar, a full view image of a thumbnail image, or a tutorial for a menu item.

6. The method according to claim 1, further comprising:
detecting rotation of the terminal relative to an initial position;
displaying a preview image, which is the item information, on the second screen of the plurality of screens when an amount of the rotation meets a first threshold and the rotation is in a first direction; and
displaying a preview image, which is the item information, on a third screen of the plurality of screens when an amount of the rotation meets a second threshold and the rotation is in a second direction.

7. The method according to claim 1, wherein each of the plurality of screens comprise a separate viewing direction, and wherein at least a portion of the viewing direction of each of the plurality of screens does not permit viewing of other screens of the plurality of screens.

8. The method according to claim 1, wherein the plurality of screens comprises the first screen, a second screen, and a third screen, the method further comprising:
displaying the item on the first screen using a first application;
displaying a second item on the second screen using a second application; and
displaying a third item on the third screen using a third application.

9. A terminal, comprising:
a display configured to simultaneously display a plurality of screens in a corresponding plurality of spatially different directions;
a user interface configured to receive user input; and
a processor configured to:
cause displaying of an item on a first screen of the plurality of screens;
receiving user input from the user interface with regard to the item; and
cause displaying of item information on a second screen of the plurality of screens responsive to the receiving of the user input, wherein the item information comprises information relating to the item.

10. The terminal according to claim 9, wherein the user interface is structured to include an input key configured to receive the user input, and wherein the controller is further configured to:
select the item responsive to receiving the user input to the input key; and
cause the displaying of the item information after the item is selected.

11. The terminal according to claim 9, further comprising:
a sensor configured to permit detecting of rotation of the terminal relative to an initial position, and where the processor is further configured to:
cause displaying a preview image, which is the item information, on the second screen of the plurality of screens when an amount of the rotation meets a first threshold and the rotation is in a first direction; and
cause displaying a preview image, which is the item information, on a third screen of the plurality of screens when an amount of the rotation meets a second threshold and the rotation is in a second direction.

12. The terminal according to claim 9, wherein each of the plurality of screens comprise a separate viewing direction, and wherein at least a portion of the viewing direction of each of the plurality of screens does not permit viewing of other screens of the plurality of screens.

13. The terminal according to claim 9, wherein the plurality of screens comprises the first screen, a second screen, and a third screen, and wherein the processor is further configured to:
cause displaying of the item on the first screen using a first application;
cause displaying of a second item on the second screen using a second application; and
cause displaying of a third item on the third screen using a third application.

14. A display method for a terminal, the method comprising:
displaying simultaneously, on a single touch screen display, a plurality of screens in a corresponding plurality of spatially different directions, wherein each of the plurality of screens comprise a separate viewing direction, and wherein at least a portion of the viewing direction of each of the plurality of screens does not permit viewing of other screens of the plurality of screens;
displaying an item on a first screen of the plurality of screens using a first application;
receiving user input at the touch screen display with regard to the item;
displaying item information on a second screen of the plurality of screens using a second application, the displaying of the item information being responsive to the receiving of the user input, and wherein the item information comprises information relating to the item; and
displaying a third item on the third screen using a third application, wherein the first application, the second application, and the third application are different applications.

15. The method according to claim 14, further comprising:
detecting rotation of the terminal relative to an initial position;
displaying a preview image, which is the item information, on the second screen of the plurality of screens when an amount of the rotation meets a first threshold and the rotation is in a first direction; and
displaying a preview image, which is the item information, on a third screen of the plurality of screens when an amount of the rotation meets a second threshold and the rotation is in a second direction.
